# EUROPÄISCHE PATENTSCHRIFT

(11) **EP 3 714 154 B1**
(45) Veröffentlichungstag und Bekanntmachung des Hinweises auf die Patenterteilung: **01.12.2021**
(21) Anmeldenummer: 18795565.3
(22) Anmeldetag: 30.10.2018
(51) Int. Cl.: F02B 37/18, F02M 26/65, F02M 26/67, F16J 15/18, F16J 15/56, F16K 1/32, F16K 27/08, F16K 41/00, F16K 41/02

(54) **ABGASVENTIL FÜR EINE VERBRENNUNGSKRAFTMASCHINE**
EXHAUST GAS VALVE FOR AN INTERNAL COMBUSTION ENGINE
VANNE D'ÉCHAPPEMENT POUR MOTEUR À COMBUSTION INTERNE

(30) Priorität: 24.11.2017 DE 102017127793
(43) Veröffentlichungstag der Anmeldung: 30.09.2020
(73) Patentinhaber: Pierburg GmbH, 41460 Neuss (DE)
(72) Erfinder: GERARDS, Hans, 52538 Gangelt (DE); SUTTY, Patrick, 40477 Düsseldorf (DE); VIERKOTTEN, Dirk, 53804 Much (DE)
(74) Vertreter: terpatent Patentanwälte ter Smitten Eberlein-Van Hoof Rütten Daubert
(86) Internationale Anmeldenummer: PCT/EP2018/079609
(87) Internationale Veröffentlichungsnummer: WO 2019/101477

(56) Entgegenhaltungen:
- DE-A1- 10 336 976
- DE-A1- 19 755 238
- DE-T5-112009 001 400

## Beschreibung

Die Erfindung betrifft ein Abgasventil für eine Verbrennungskraftmaschine mit einem Aktor, einem Ventilschaft, welcher mittels des Aktors bewegbar ist, einem Ventilkörper, der an dem Ventilschaft befestigt ist, einem Ventilsitz, auf den der Ventilkörper absenkbar ist und von dem der Ventilkörper abhebbar ist, einer Führungsbuchse, welche in einem Gehäuse angeordnet ist und über welche der Ventilschaft im Gehäuse gelagert ist, einem Dichtmittel zur Abdichtung eines Spaltes zwischen der Führungsbuchse und dem Ventilschaft, und einer den Ventilschaft radial umgebenden Abschirmhülse, wobei die Abschirmhülse einen konischen Abschnitt aufweist, in dem sich der Durchmesser der Abschirmhülse axial in Richtung eines dem Ventilkörper zugewandten ersten axialen Endes verjüngt.

Derartige Abgasventile werden insbesondere als Abgasrückführventile zur Regelung eines in die Zylinder des Verbrennungsmotors zurückgeführten Abgasstromes verwendet, der in den Zylindern erneut zur Reduzierung der Stickstoffemissionen der Verbrennung zugeführt wird.

Diese Ventile werden üblicherweise als Hubventile ausgeführt, bei denen ein an einem Ventilschaft befestigter Ventilkörper von einem Ventilsitz abhebbar oder auf diesen absenkbar ist, welcher zwischen einem Einlass und einem Auslass angeordnet ist. Abhängig von der vorhandenen Motorlast wird so der freie Querschnitt zwischen dem Einlass und dem Auslass geregelt, um einen optimalen Abgasstrom zurückzuführen. Für eine möglichst genaue Regelung werden zumeist elektromotorische Aktoren mit nachgeschalteten Getrieben zur Betätigung des Ventilschafts verwendet.

Problematisch sind jedoch die Korrosivität der Abgase, die im Abgasstrom enthaltenen Partikel, beispielsweise Rußpartikel im Abgasstrom eines Dieselmotors, sowie die vorhandene thermische Belastung der Ventile und deren Aktoren. Diese Partikel können sich an dem Ventilschaft beziehungsweise zwischen dem Ventilschaft und der Führungsbuchse absetzen und somit zu einer Schwergängigkeit des Ventils führen. Zusätzlich können heiße Abgasströme entlang des Ventilschafts zum Aktor gelangen und dort zu einer thermischen Überlastung führen. Daher sind verschiedene Möglichkeiten zur Reduzierung der Ablagerungen und zur Abdichtung des Ventilschafts bekannt geworden.

Aus der DE 10 2015 111 324 A1 ist eine Abschirmhülse bekannt, die zwischen der Führungsbuchse und dem Ventilkörper angeordnet ist und den Ventilschaft radial umgibt. Die Abschirmhülse weist einen konischen Abschnitt auf, in dem sich der Durchmesser der Abschirmhülse axial in Richtung eines dem Ventilkörper zugewandten ersten axialen Endes verjüngt. An dem verjüngten ersten axialen Ende liegt die Abschirmhülse an dem Ventilschaft an, um eventuell vorhandene Ablagerungen von dem Ventilschaft zu entfernen. Bei dieser Form der Abschirmhülse besteht jedoch das Problem, dass an dem Ventilschaft Riefen entstehen können, die die Führungsbuchse beschädigen. Ferner kann eine zuverlässige Abdichtung der Führungsbuchse auf diese Weise nicht realisiert werden.

Des Weiteren ist aus der DE 10 2010 035 622 A1 ein Abgasrückführventil bekannt, bei dem an der zum Aktor weisenden Seite der Führungsbuchse ein Radialwellenlippendichtring angeordnet, über den das Eindringen von Abgasen oder von Partikeln in den Aktor vermieden werden soll. Zusätzlich weist die Führungsbuchse einen zu dem Ventilschaft gewandten Abschnitt mit einem verkleinerten Durchmessers auf, um Ablagerungen von dem Ventilschaft abzuschaben, bevor diese in den Spalt zwischen Ventilschaft und Führungsabschnitt der Buchse gelangen. Der Radialwellenlippendichtring weist jedoch eine eingeschränkte thermische Belastbarkeit auf. Ferner kann auf Grund der Anordnung des Radialwellenlippendichtrings an der zum Aktor weisenden Seite der Führungsbuchse ein Eindringen von Abgasen und von Partikeln in die Führungsbuchse nicht verhindert werden.

Auch DE 11 2009 001400 T5 offenbart ein ähnliches Abgasrückführventil mit einer Führungsbuchse und einer Abschirmhülse.

Es stellt sich daher die Aufgabe, ein Abgasventil für eine Verbrennungskraftmaschine bereit zu stellen, welches über eine lange Lebensdauer ein Eindringen von Abgasen und somit ein Eindringen von Partikeln in die Führungsbuchse deutlich reduziert und gleichzeitig die notwendigen Stellkräfte gering hält. Dennoch soll dieses möglichst kostengünstig mit geringem Herstellungs- und Montageaufwand realisiert werden können.

Diese Aufgabe wird durch ein Abgasventil für eine Verbrennungskraftmaschine mit den Merkmalen des Hauptanspruchs 1 gelöst.

Dadurch, dass das Dichtmittel radial zwischen der Abschirmhülse und dem Ventilschaft und axial im konischen Abschnitt der Abschirmhülse beabstandet zu dem ersten axialen Ende der Abschirmhülse angeordnet ist, wobei die Form des Dichtmittels im unbelasteten Zustand auf der radialen Außenseite mit der Form der Abschirmhülseninnenseite korrespondiert und auf der radialen Innenseite mit der Form der Ventilschaftaußenseite korrespondiert, und dass das Dichtmittel in axialer Richtung zu dem ersten axialen Ende der Abschirmhülse hin durch eine Feder belastet ist, wird ein Eindringen von Abgasen und somit ein Eindringen von Partikeln in den Spalt zwischen der Führungsbuchse und dem Ventilschaft verhindert. Auf Grund der konischen Form der Abschirmhülse erzeugt die axiale Belastung des Dichtmittels durch die Feder eine Verformung des Dichtmittels in radialer Richtung, insbesondere in dem ersten axialen Ende der Abschirmhülse zugewandten Bereich des Dichtmittels. Hierdurch wird das Dichtmittel in diesem Bereich mit dem Ventilschaft in Kontakt gebracht und somit eine effektive Abdichtung erzielt. Auf Grund der nur geringen Kontaktfläche zwischen dem Dichtmittel und dem Ventilschaft in dem ersten axialen Ende zugewandten Bereich des Dichtmittels, ist für die Aktuation des Ventils nur eine geringe Stellkraft nötig. Dabei bleiben die Herstellungskosten sowie der Montageaufwand aufgrund der geringen Teileanzahl gering.

Vorzugsweise ist die Feder axial zwischen der Führungsbuchse und dem Dichtmittel angeordnet. Besonders bevorzugt wird die Feder durch ein axiales Ende der Führungsbuchse axial gestützt. Dies ermöglicht eine einfache Lagerung und Montage der Feder in der Abschirmhülse.

Vorteilhafterweise ist axial zwischen der Feder und dem Dichtmittel eine den Ventilschaft radial umschließende und axial verschiebbare Scheibe angeordnet, auf welcher die Feder in axialer Richtung anliegt. Hierdurch wird die von der Feder generierte axiale Kraft gleichmäßig auf die Stirnfläche des Dichtmittels übertragen und somit eine ungleichmäßige Belastung des Dichtmittels verhindert.

Bevorzugt ist die Feder eine den Ventilschaft radial umgebende Wellenfeder, welche eine in Umfangsrichtung homogene Belastung des Dichtmittels bewirkt und besonders einfach zu montieren ist.

Vorzugsweise ist das Dichtmittel in radialer Richtung geringfügig verformbar. Dies ermöglicht die Verwendung eines Dichtmittels, welches im unbelasteten Zustand ein geringfügiges Spiel bezüglich des Ventilschafts aufweist, wodurch die Reibung zwischen Dichtmittel und Ventilschaft deutlich verringert wird. Auf Grund der konischen Form der Abschirmhülse wird das Dichtmittel bei axialer Belastung durch die Feder in radialer Richtung verformt, wobei die Verformung des Dichtmittels in dem ersten axialen Ende zugewandten Bereich stärker ausgeprägt ist als in dem ersten axialen Ende abgewandten Bereich. Hierdurch wird das Dichtmittel im dem ersten axialen Ende zugewandten Bereich mit dem Ventilschaft in Kontakt gebracht. Dies ermöglicht eine effiziente Abdichtung der Führungsbuchse bei gleichzeitig geringer notwendiger Stellkraft für die Aktuation des Ventils.

Besonders bevorzugt weist das Dichtmittel im axial belasteten Zustand an der radialen Innenseite eine konische Form auf, wobei sich der Innendurchmesser des Dichtmittels in Richtung des ersten axialen Endes der Abschirmhülse verjüngt. Hierdurch ist im belasteten Zustand die Kontaktfläche zwischen dem Dichtmittel und dem Ventilschaft und folglich die Reibung besonders gering, sodass nur eine besonders geringe Stellkraft für die Aktuation des Ventils notwendig ist.

Vorteilhafterweise ist das Dichtmittel eine Graphitdichtung. Eine Graphitdichtung ermöglicht eine effiziente Abdichtung der Führungsbuchse bei gleichzeitig geringer Reibung zwischen der Dichtung und dem Ventilschaft.

In einer besonders vorteilhaften Ausführung ist das Graphit der Graphitdichtung in ein Drahtgeflecht eingebettet, wodurch die Graphitdichtung insbesondere radial verformbar ist. Dies ermöglicht wie oben beschrieben eine effiziente Abdichtung der Führungsbuchse bei gleichzeitig geringer notwendiger Stellkraft.

Ein zusätzlicher Schutz vor einem Eindringen des Abgases in den Aktor und der daraus folgenden thermischen Belastung wird erreicht, wenn an dem zum Dichtmittel entgegengesetzten axialen Ende der Führungsbuchse ein Lippendichtring angeordnet ist, der den Ventilschaft radial umgibt.

Vorteilhafterweise liegt die Abschirmhülse an dem ersten axialen Ende entlang ihres Umfangs am Ventilschaft an, um eventuell vorhandene Ablagerungen von dem Ventilschaft zu entfernen.

In einer vorteilhaften Ausgestaltung der Erfindung weist die Führungsbuchse einen Absatz auf, gegen den die Abschirmhülse mit einem an einem zweiten dem Ventilkörper abgewandten axialen Ende der Abschirmhülse ausgebildeten Kragen anliegt. Dies dient der einfachen Lagefixierung der Abschirmhülse zur Führungsbuchse und verhindert Montagefehler.

Vorzugsweise ist die Abschirmhülse an der Führungsbuchse befestigt, so dass für die Montage keine weiteren Bauteile erforderlich sind.

Besonders vereinfacht wird die Montage, wenn die Abschirmhülse durch eine Pressverbindung an der Führungsbuchse befestigt ist, sodass auf weitere Befestigungsschritte und Befestigungsmittel verzichtet werden kann.

Ein Ausführungsbeispiel eines erfindungsgemäßen Abgasventils für einen Verbrennungsmotor wird nachfolgend anhand der beigefügten Figuren beschrieben, wobei
Figur 1 einen Ausschnitt einer Seitenansicht eines erfindungsgemäßen Abgasventils in geschnittener Darstellung zeigt,
Figur 2 eine vergrößerte Darstellung eines Dichtelement des Abgasventils aus Figur 1 im unbelasteten Zustand zeigt, und
Figur 3 das Dichtelement aus Figur 2 im belasteten Zustand zeigt.

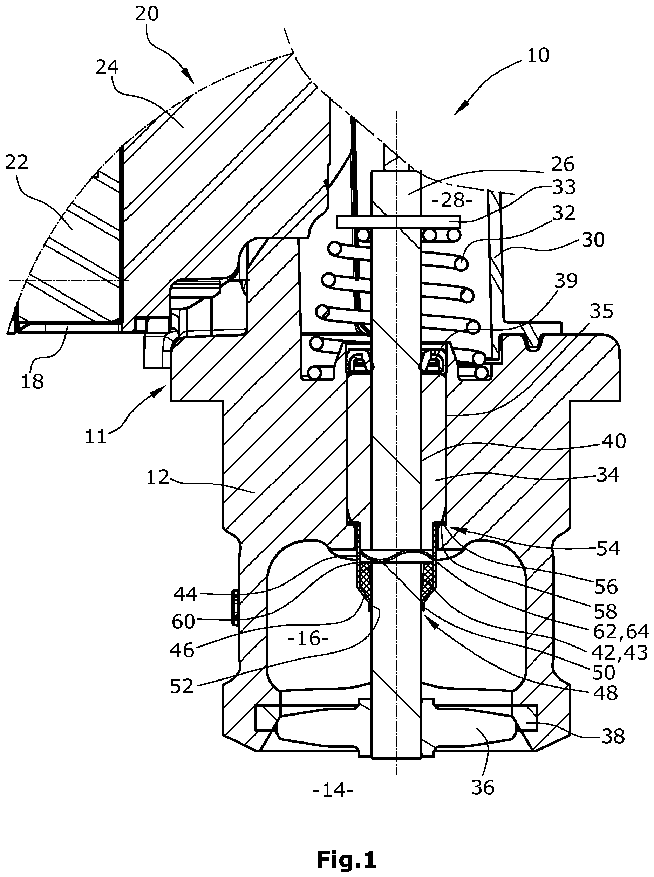

Figur 1 zeigt ein erfindungsgemäßes Abgasventil 10 mit einem Gehäuse 11, welches aus einem Strömungsgehäuse 12 mit einem Einlass 14 und einem Auslass 16 für das Abgas sowie einem Aktorgehäuse 18 besteht. Im Aktorgehäuse 18 ist ein Aktor 20 ausgebildet, der aus einem Elektromotor 22 sowie einem vom Elektromotor 22 angetriebenen Getriebe 24 besteht, über welches die Bewegung des Elektromotors 22 auf einen Ventilschaft 26 untersetzt übertragen wird. Hierzu weist das Getriebe 24 einen nicht dargestellten Exzenter auf, der mit einer nicht dargestellten Kulisse zusammenwirkt, wodurch die rotatorische Bewegung des Elektromotors 22 in eine translatorische Bewegung des Ventilschafts 26 übertragen wird. Die Kulisse und der Exzenter ragen in einen Getrieberaum 28, der durch eine Abdeckkappe 30 geschlossen wird. Im Getrieberaum 28 ist zusätzlich eine den Ventilschaft 26 radial umgebende Rückstellfeder 32 angeordnet, die sich mit einem ersten axialen Ende auf dem Strömungsgehäuse 12 abstützt und mit dem gegenüberliegenden zweiten axialen Ende an einer Federlagerung 33 anliegt, welche an dem Ventilschaft 26 befestigt ist. Folglich wird das Abgasventil 10 durch die Rückstellfeder 32 in Schließrichtung vorgespannt.

Der Ventilschaft 26 ist in einer Führungsbuchse 34 gelagert, welche in einer Bohrung 35 des Strömungsgehäuses 12 befestigt ist. Am zum Aktor 20 entgegengesetzten Ende des Ventilschafts 26 ist ein Ventilkörper 36 befestigt, der mit einem Ventilsitz 38 zusammenwirkt, der zwischen dem Einlass 14 und dem Auslass 16 im Strömungsgehäuse 12 ausgebildet ist. Durch Betätigung des Aktors 20 wird so der Ventilkörper 36 über den Ventilschaft 26 entgegen der Kraft der Rückstellfeder 32 vom Ventilsitz 38 abgehoben oder durch die Kraft der Rückstellfeder 32 auf diesen abgesenkt und somit der freie Durchströmungsquerschnitt zwischen dem Einlass 14 und dem Auslass 16 geregelt.

Um ein Eindringen von heißen Abgasen in den Getrieberaum 28 zu verhindern, ist innerhalb der Bohrung 35 des Strömungsgehäuses 12 an der dem Getrieberaum 28 zugewandten Stirnseite der Führungsbuchse 34 ein den Ventilschaft 26 radial umgebender Lippendichtring 39 angebracht. Zusätzlich ist, um einen Spalt 40 zwischen dem Ventilschaft 26 und der Führungsbuchse 34 abzudichten ein den Ventilschaft 26 radial umgebendes Dichtmittel 42 vorgesehen, welches im vorliegenden Ausführungsbeispiel aus einem Drahtgeflecht 43 mit eingebettetem Graphit besteht und in radialer Richtung geringfügig verformbar ist.

Das Dichtmittel 42 ist innerhalb einer Abschirmhülse 44 angeordnet, welche den Ventilschaft 26 radial umgibt und einen konischen Abschnitt 46 aufweist, in dem sich der Durchmesser der Abschirmhülse axial in Richtung eines dem Ventilkörper 36 zugewandten ersten axialen Endes 48 verjüngt. Das Dichtmittel 42 ist axial in dem konischen Abschnitt 46 der Abschirmhülse 44 positioniert.

Die Abschirmhülse 44 weist an dem ersten axialen Ende 48 einen zylinderförmigen Abstreifabschnitt 50 auf, in dem die Abschirmhülse 44 mit ihrer Innenfläche 52 an dem Ventilschaft 26 anliegt. An einem zweiten dem Ventilkörper 36 abgewandten axialen Ende 54 weist die Abschirmhülse 44 einen radial nach außen weisenden ringförmigen Kragen 56 auf. Die Abschirmhülse 44 ist über eine Pressverbindung an der Führungsbuchse 34 befestigt. Die Abschirmhülse 44 und somit auch die Führungsbuchse 34 sind in axialer Richtung über den Kragen 56 auf einem axialen Strömungsgehäuseabsatz 58 gelagert.

Das Dichtmittel 42 wird axial in Richtung des Abstreifabschnitts 50 der Abschirmhülse 44 über eine Scheibe 60 durch eine Feder 62 belastet. Die Scheibe 60 umschließt den Ventilschaft 26 radial und ist axial verschiebbar auf der Stirnseite des Dichtelements 42 gelagert. Die Feder 62 ist im vorliegenden Ausführungsbeispiel eine den Ventilschaft 26 radial umgebende Wellenfeder 64, welche in axialer Richtung einerseits durch die Scheibe 60 und andererseits durch eine Stirnseite der Führungsbuchse 34 gestützt ist.

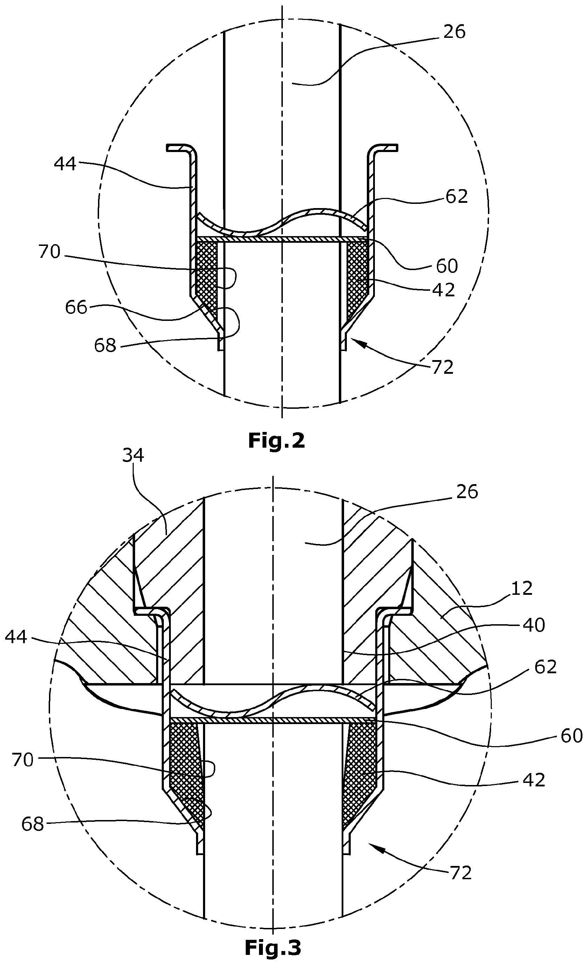

Figur 2 zeigt das Dichtmittel 42 im unbelasteten Zustand. In diesem Zustand korrespondiert die Form des Dichtmittels 42 auf der radialen Außenseite 66 mit der konischen Form der Innenseite 68 der Abschirmhülse 44 und korrespondiert auf der radialen Innenseite 70 mit der zylindrischen Form des Ventilschafts 26. Der Innendurchmesser des Dichtmittels 42 ist in diesem Fall geringfügig größer als der Außendurchmesser des Ventilschafts 26.

Wird das Dichtmittel 42 wie in Figur 3 dargestellt in axialer Richtung durch die Feder 62 belastet, wird es in axialer Richtung gegen die konische Innenseite 68 der Abschirmhülse 44 gepresst. Hierdurch verformt sich das Dichtmittel 42 insbesondere in radialer Richtung, sodass die radiale Innenseite 70 des Dichtmittels 42 eine etwa konische Form aufweist und an dem der Feder 62 abgewandten axialen Ende 72 mit dem Ventilschaft 26 in Kontakt gebracht wird. Hierdurch wird der Spalt 40 zwischen dem Ventilschaft 26 und der Führungsbuchse 34 effektiv abgedichtet und somit ein Eindringen von Abgas und von Partikeln in den Spalt 40 verhindert. Auf Grund der nur geringen Kontaktfläche zwischen dem Dichtmittel 42 und dem Ventilschaft 26 sowie der guten Reibeigenschaften des Graphits ist die Reibung gering, sodass für die Aktuation des Abgasventils 10 nur eine geringe Stellkraft notwendig ist.

Das Dichtmittel 42, die Scheibe 60 und die Feder 62 werden zur Montage einfach in die Abschirmhülse 44 eingelegt. Beim Aufschieben der Abschirmhülse 44 auf die Führungsbuchse 34 wird die Feder 62 zwischen der axialen Stirnseite der Führungsbuchse 34 und der Scheibe 60 gestaucht, wodurch das Dichtmittel 42 in axialer Richtung belastet wird.

Das erfindungsgemäße Abgasventil ist entsprechend einfach zu montieren und weist sowohl zwischen dem Gehäuse und der Abschirmhülse als auch zwischen der Abschirmhülse und der Führungsbuchse und auch zwischen dem Ventilschaft und der Führungsbuchse eine hohe Dichtigkeit auf, so dass ein Eindringen von Abgas oder von Partikeln in Richtung des Aktors minimiert wird. Insbesondere im Bereich des als Spielpassung auszuführenden Spaltes zwischen dem Ventilschaft und der Führungsbuchse weist dieses Abgasventil im Vergleich zu bekannten Ausführungen eine verbesserte Abdichtung auf, so dass der Ventilschaft und die Führungsbuchse vor Ablagerungen, die zu Riefen an dem Ventilschaft oder der Führungsbuchse führen, geschützt sind, wodurch der Verschleiß deutlich reduziert wird und so die Lebensdauer erhöht wird. Ferner ist auf Grund der nur geringen Kontaktfläche zwischen dem Dichtmittel und dem Ventilschaft sowie der guten Reibeigenschaften des Graphits für die Aktuation des Abgasventils nur eine geringe Stellkraft notwendig.

Es sollte deutlich sein, dass der Schutzbereich der vorliegenden Anmeldung nicht auf das beschriebene Ausführungsbeispiel beschränkt ist. Insbesondere können die Gehäuseteilungen verändert werden oder kann ein anderer Federtyp für die Belastung des Dichtmittels genutzt werden, beispielsweise eine Tellerfeder. Ferner kann auch auf den Lippendichtring verzichtet werden, da bereits durch das Dichtmittel in der Abschirmhülse eine üblicherweise ausreichende Dichtheit realisiert wird. Auch das Dichtmittel selbst muss nicht zwingend ein Drahtgeflecht enthalten. Auch andere Dichtungen, die ein Gleiten der Ventilstange erlauben, können vorgesehen werden.

### Bezugszeichenliste

- 10: Abgasventil
- 11: Gehäuse
- 12: Strömungsgehäuse
- 14: Einlass
- 16: Auslass
- 18: Aktorgehäuse
- 20: Aktor
- 22: Elektromotor
- 24: Getriebe
- 26: Ventilschaft
- 28: Getrieberaum
- 30: Abdeckkappe
- 32: Rückstellfeder
- 33: Federlagerung
- 34: Führungsbuchse
- 35: Bohrung
- 36: Ventilkörper
- 38: Ventilsitz
- 39: Lippendichtring
- 40: Spalt
- 42: Dichtmittel
- 43: Drahtgeflecht
- 44: Abschirmhülse
- 46: konischer Abschirmhülsenabschnitt
- 48: erstes axiales Abschirmhülsenende
- 50: Abstreifabschnitt
- 52: Abstreifabschnittinnenfläche
- 54: zweites axiales Abschirmhülsenende
- 56: Kragen
- 58: Strömungsgehäuseabsatz
- 60: Scheibe
- 62: Feder
- 64: Wellenfeder
- 66: radiale Dichtmittelaußenseite
- 68: konische Abschirmhülseninnenseite
- 70: radiale Dichtmittelinnenseite
- 72: axiales Dichtmittelende

## Patentansprüche

1. Abgasventil (10) für eine Verbrennungskraftmaschine mit einem Aktor (20),
einem Ventilschaft (26), welcher mittels des Aktors (20) bewegbar ist,
einem Ventilkörper (36), der an dem Ventilschaft (26) befestigt ist, einem Ventilsitz (38), auf den der Ventilkörper (36) absenkbar ist und von dem der Ventilkörper (36) abhebbar ist,
einer Führungsbuchse (34), welche in einem Gehäuse (11) angeordnet ist und über welche der Ventilschaft (26) im Gehäuse (11) gelagert ist,
einem Dichtmittel (42) zur Abdichtung eines Spaltes (40) zwischen der Führungsbuchse (34) und dem Ventilschaft (26), und
einer den Ventilschaft (26) radial umgebenden Abschirmhülse (44),
**dadurch gekennzeichnet, dass**
die Abschirmhülse (44) einen konischen Abschnitt (46) aufweist, in dem sich der Durchmesser der Abschirmhülse (44) axial in Richtung eines dem Ventilkörper (36) zugewandten ersten axialen Endes (48) verjüngt,
**dass** das Dichtmittel (42) radial zwischen der Abschirmhülse (44) und dem Ventilschaft (26) und axial im konischen Abschnitt (46) der Abschirmhülse (44) beabstandet zu dem ersten axialen Ende (48) der Abschirmhülse (44) angeordnet ist, wobei die Form des Dichtmittels (42) im unbelasteten Zustand auf der radialen Außenseite (66) mit der Form der Abschirmhülseninnenseite (68) korrespondiert und auf der radialen Innenseite (70) mit der Form der Ventilschaftaußenseite korrespondiert, und dass
das Dichtmittel (42) in axialer Richtung zu dem ersten axialen Ende (48) der Abschirmhülse (44) hin durch eine Feder (62) belastet ist.

2. Abgasventil (10) für eine Verbrennungskraftmaschine nach Anspruch 1,
**dadurch gekennzeichnet, dass**
die Feder (62) axial zwischen der Führungsbuchse (34) und dem Dichtmittel (42) angeordnet ist.

3. Abgasventil (10) für eine Verbrennungskraftmaschine nach Anspruch 2,
**dadurch gekennzeichnet, dass**
die Feder (62) durch ein axiales Ende der Führungsbuchse (34) axial gestützt ist.

4. Abgasventil (10) für eine Verbrennungskraftmaschine nach einem der vorhergehenden Ansprüche,
**dadurch gekennzeichnet, dass**
axial zwischen der Feder (62) und dem Dichtmittel (42) eine den Ventilschaft (26) radial umschließende und axial verschiebbare Scheibe (60) angeordnet ist, auf welcher die Feder (62) in axialer Richtung aufliegt.

5. Abgasventil (10) für eine Verbrennungskraftmaschine nach einem der vorhergehenden Ansprüche,
**dadurch gekennzeichnet, dass**
die Feder (62) eine den Ventilschaft (26) radial umgebende Wellenfeder (64) ist.

6. Abgasventil (10) für eine Verbrennungskraftmaschine nach einem der vorhergehenden Ansprüche,
**dadurch gekennzeichnet, dass**
das Dichtmittel (42) in radialer Richtung geringfügig verformbar ist.

7. Abgasventil (10) für eine Verbrennungskraftmaschine nach Anspruch 6,
**dadurch gekennzeichnet, dass**
das Dichtmittel (42) im axial belasteten Zustand an der radialen Innenseite (70) eine geringfügig konische Form aufweist, wobei sich der Innendurchmesser des Dichtmittels (42) in Richtung des ersten axialen Endes (48) der Abschirmhülse (44) verjüngt.

8. Abgasventil (10) für eine Verbrennungskraftmaschine nach einem der vorhergehenden Ansprüche,
**dadurch gekennzeichnet, dass**
das Dichtmittel (42) eine Graphitdichtung ist.

9. Abgasventil (10) für eine Verbrennungskraftmaschine nach Anspruch 8,
**dadurch gekennzeichnet, dass**
das Dichtmittel (42) ein Drahtgeflecht (43) ist, in welches Graphit eingebettet ist.

10. Abgasventil (10) für eine Verbrennungskraftmaschine nach einem der vorhergehenden Ansprüche,
**dadurch gekennzeichnet, dass**
an dem zum Dichtmittel (42) entgegengesetzten axialen Ende der Führungsbuchse (34) ein Lippendichtring (39) angeordnet ist, der den Ventilschaft (26) radial umgibt.

11. Abgasventil (10) für eine Verbrennungskraftmaschine nach einem der vorhergehenden Ansprüche,
**dadurch gekennzeichnet, dass**
die Abschirmhülse (44) an dem ersten axialen Ende (48) entlang ihres Umfangs am Ventilschaft (26) anliegt.

12. Abgasventil (10) für eine Verbrennungskraftmaschine nach einem der vorhergehenden Ansprüche,
**dadurch gekennzeichnet, dass**
die Führungsbuchse (34) einen Absatz aufweist, gegen den die Abschirmhülse (44) mit einem an einem zweiten dem Ventilkörper (36) abgewandten axialen Ende (54) der Abschirmhülse (44) ausgebildeten Kragen (56) anliegt.

13. Abgasventil (10) für eine Verbrennungskraftmaschine nach einem der vorhergehenden Ansprüche,
**dadurch gekennzeichnet, dass**
die Abschirmhülse (44) an der Führungsbuchse (34) befestigt ist.

14. Abgasventil (10) für eine Verbrennungskraftmaschine nach Anspruch 13,
**dadurch gekennzeichnet, dass**
die Abschirmhülse (44) durch eine Pressverbindung an der Führungsbuchse (34) befestigt ist.

## Claims

1. Exhaust valve (10) for an internal combustion engine, comprising an actuator (20),
a valve stem (26) adapted to be moved by means of the actuator (20),
a valve body (36) fastened to the valve stem (26),
a valve seat (38) onto which the valve body (36) can be lowered and from which the valve body (36) can be lifted,
a guide bushing (34) that is arranged in a housing (11) and via which the valve stem (26) is mounted in the housing (11),
a sealing means (42) for sealing a gap (40) between the guide bushing (34) and the valve stem (26), and
a shielding sleeve (44) radially surrounding the valve stem (26),
**characterized in that** the shielding sleeve (44) has a conical section (46) in which the diameter of the shielding sleeve (44) tapers axially in the direction of a first axial end (48) facing the valve body (36) tapered,
that the sealing means (42) is arranged radially between the shielding sleeve (44) and the valve stem (26) and axially in the conical section (46) of the shielding sleeve (44) spaced from the first axial end (48) of the shielding sleeve (44), the shape of the sealing means (42) in the unloaded state on the radial outside (66) corresponds to the shape of the shielding sleeve inside (68) and on the radial inside (70) corresponds to the shape of the valve stem outside, and
that the sealing means (42) is loaded by a spring (62) in the axial direction towards the first axial end (48) of the shielding sleeve (44).

2. Exhaust valve (10) for an internal combustion engine according to claim 1, **characterized in that** the spring (62) is arranged axially between the guide bushing (34) and the sealing means (42).

3. Exhaust valve (10) for an internal combustion engine according to claim 2, **characterized in that** the spring (62) is axially supported by an axial end of the guide bushing (34).

4. Exhaust valve (10) for an internal combustion engine according to one of the preceding claims, **characterized in that** a disc (60) radially enclosing the valve stem (26) and being axially displaceable is arranged axially between the spring (62) and the sealing means (42) on which disc the spring (62) rests in the axial direction.

5. Exhaust valve (10) for an internal combustion engine according to one of the preceding claims, **characterized in that** the spring (62) is a wave spring (64) radially surrounding the valve stem (26).

6. Exhaust valve (10) for an internal combustion engine according to one of the preceding claims, **characterized in that** the sealing means (42) is slightly deformable in the radial direction.

7. Exhaust valve (10) for an internal combustion engine according to claim 6, **characterized in that** the sealing means (42) in the axially loaded state has a slightly conical shape on the radial inner side (70), the inner diameter of the sealing means (42) tapering in the direction of the first axial end (48) of the shielding sleeve (44).

8. Exhaust valve (10) for an internal combustion engine according to one of the preceding claims, **characterized in that** the sealing means (42) is a graphite seal.

9. Exhaust valve (10) for an internal combustion engine claim 8, **characterized in that** the sealing means (42) is a wire mesh (43) in which graphite is embedded.

10. Exhaust valve (10) for an internal combustion engine according to one of the preceding claims, **characterized in that** a lip sealing ring (39) radially surrounding the valve stem (26) is arranged on the axial end of the guide bushing (34) opposite the sealing means (42).

11. Exhaust valve (10) for an internal combustion engine according to one of the preceding claims, **characterized in that** at the first axial end (48), the shielding sleeve (44) rests along its circumference on the valve stem (26).

12. Exhaust valve (10) for an internal combustion engine according to one of the preceding claims, **characterized in that** the guide bushing (34) has a shoulder against which the shielding sleeve (44) rests with a collar (56) formed on a second axial end (54) of the shielding sleeve (44) averted from the valve body (36).

13. Exhaust valve (10) for an internal combustion engine according to one of the preceding claims, **characterized in that** the shielding sleeve (44) is attached to the guide bushing (34).

14. Exhaust valve (10) for an internal combustion engine according to claim 13, **characterized in that** the shielding sleeve (44) is fastened to the guide bushing (34) by press fitting.

## Revendications

1. Soupape d'échappement (10) pour moteur à combustion interne comprenant
un actionneur (20),
une tige de soupape (26) déplacée au moyen de l'actionneur (20),
un corps de soupape (36) fixé sur la tige de soupape (26),
un siège de soupape (38) sur lequel le corps de soupape (36) peut être abaissé et à partir duquel le corps de soupape (36) peut être soulevé,
une douille de guidage (34) disposée dans un carter (11) et par l'intermédiaire de laquelle la tige de soupape (26) est montée dans le carter (11),
un moyen d'étanchéité (42) pour étanchéifier une fente (40) entre la douille de guidage (34) et la tige de soupape (26), et
une douille de blindage (44) entourant radialement la tige de soupape (26),
**caractérisé en ce que**
la douille de blindage (44) présent une section conique (46) dans laquelle le diamètre de la douille de protection (44) s'effile axialement en direction d'une première extrémité (48) axiale tournée vers le corps de soupape (36) conique,
**en ce que** le moyen d'étanchéité (42) est disposé radialement entre la douille de blindage (44) et la tige de soupape (26) et axialement dans la section conique (46) de la douille de blindage (44) à distance de la première extrémité axiale (48) de la douille de blindage (44), la forme du moyen d'étanchéité (42) dans l'état non-chargé correspondant, sur l'extérieur radial (66), à la forme de la face intérieure (68) de la douille de blindage et correspondant, sur la face intérieure radiale (70), à la forme de la face extérieure de la tige de soupape, et
**en ce que** le moyen d'étanchéité (42) est sollicité par un ressort (62) dans la direction axiale vers la première extrémité axiale (48) de la douille de blindage (44).

2. Soupape d'échappement (10) pour moteur à combustion interne selon la revendication 1, **caractérisé en ce que** le ressort (62) est disposé axialement entre la douille de guidage (34) et le moyen d'étanchéité (42).

3. Soupape d'échappement (10) pour moteur à combustion interne selon la revendication 2, **caractérisé en ce que** le ressort (62) est supporté axialement par une extrémité axiale de la douille de guidage (34).

4. Soupape d'échappement (10) pour moteur à combustion interne selon l'une quelconque des revendications précédentes, **caractérisé en ce qu'**un disque (60) est disposé axialement entre le ressort (62) et le moyen d'étanchéité (42), ledit disque (60) renfermant radialement la tige de soupape (26) et étant déplaçable axialement, sur lequel le ressort (62) repose dans la direction axiale.

5. Soupape d'échappement (10) pour moteur à combustion interne selon l'une quelconque des revendications précédentes, **caractérisé en ce que** le ressort (62) est un ressort ondulé (64) radialement entourant la tige de soupape (26).

6. Soupape d'échappement (10) pour un moteur à combustion interne selon l'une quelconque des revendications précédentes, **caractérisée en ce que** le moyen d'étanchéité (42) est légèrement déformable dans la direction radiale.

7. Soupape d'échappement (10) pour moteur à combustion interne selon la revendication 6, **caractérisé en ce qu'**à l'état chargé axialement, le moyen d'étanchéité (42) a une forme légèrement conique sur le côté intérieur radial (70), le diamètre intérieur des moyens d'étanchéité (42) s'effilant en direction de la première extrémité axiale (48) de la douille de blindage (44).

8. Soupape d'échappement (10) pour moteur à combustion interne selon l'une quelconque des revendications précédentes, **caractérisé en ce que** le moyen d'étanchéité (42) est un joint en graphite.

9. Soupape d'échappement (10) pour un moteur à combustion interne selon la revendication 8, **caractérisé en ce que** le moyen d'étanchéité (42) est un treillis en fil (43) dans lequel du graphite est noyé.

10. Soupape d'échappement (10) pour moteur à combustion interne selon l'une quelconque des revendications précédentes, **caractérisé en ce qu'**une bague d'étanchéité à lèvre (39) radialement entourant la tige de soupape (26) est disposée sur l'extrémité axiale de la douille de guidage (34) opposée au moyen d'étanchéité (42).

11. Soupape d'échappement (10) pour moteur à combustion interne selon l'une quelconque des revendications précédentes, **caractérisée en ce qu'**à la première extrémité axiale (48), la douille de blindage (44) repose le long de sa circonférence sur la tige de soupape (26).

12. Soupape d'échappement (10) pour moteur à combustion interne selon l'une quelconque des revendications précédentes, **caractérisé en ce que** la douille de guidage (34) a un épaulement contre lequel repose la douille de blindage (44) avec une collerette (56) formée sur une deuxième extrémité axiale (54) de la douille de blindage (44) tournée à l'opposé du corps de vanne (36).

13. Soupape d'échappement (10) pour moteur à combustion interne selon l'une quelconque des revendications précédentes, **caractérisé en ce que** la douille de blindage (44) est fixée sur la douille de guidage (34).

14. Soupape d'échappement (10) pour moteur à combustion interne selon la revendication 13, **caractérisé en ce que** la douille de blindage (44) est fixée à la douille de guidage (34) par une liaison de sertissage.
